# EUROPEAN PATENT APPLICATION

(11) **EP 3 835 015 A1**
(43) Date of publication of application: **16.06.2021**
(21) Application number: 20211593.7
(22) Date of filing: 03.12.2020
(51) Int. Cl.: B26D 3/16, B23D 45/00, B26D 7/01, B26D 7/06

(54) **MACHINE FOR CUTTING GLAZING BEADS AND RELATED EQUIPMENT**

(30) Priority: 06.12.2019 IT 201900023316
(71) Applicant: 4Win S.r.l., 35136 Padova (PD) (IT)
(72) Inventor: PACCAGNELLA, Elio, 35136 Padova (PD) (IT)
(74) Representative: Brunacci, Marco

(57) **Abstract**

The machine (1) for cutting glazing beads comprises:
- one basic frame (2);
- cutting means (4, 5, 6) mounted on the basic frame (2) and adapted to cut at least one glazing bead (3);
- movement means (20) mounted on the basic frame (2) and adapted to move the glazing bead (3) along one direction of movement (A) close to/away from the cutting means (4, 5, 6);
wherein the movement means (20) comprise one gripping assembly (10a, 10b, 11a, 11b) movable along the direction of movement (A), defining at least one housing (7) of one portion of the glazing bead (3), provided with one retaining element (8) and movable between one gripping configuration, wherein the retaining element (8) is moved close to the glazing bead (3) and contacts it under pressure, fixing the position thereof, and at least one release configuration, wherein the retaining element (8) is moved away from the one glazing bead (3), releasing it.

## Description

### Technical Field

The present invention relates to a machine for cutting glazing beads and related equipment.

### Background Art

Various machines for cutting glazing beads are known and are used, e.g., for the production of window/door frames provided with one or more panes of glass. The machines of known type are generally provided with movable cutting means close to/away from a cutting point at which one or more glazing beads are cut.

In addition, this type of machine comprises movement means for moving one or more glazing beads along a direction of movement close to the cutting point so as to allow the cutting means to cut the glazing beads.

Generally, the movement means comprise a horizontal supporting plane provided with one or more containment channels running substantially along the direction of movement, arranged parallel to each other and adapted to contain a corresponding glazing bead.

In particular, the glazing beads are arranged cantilevered relative to the supporting plane, which is movable along the direction of movement as it approaches the cutting point.

In addition, the machines of known type generally comprise blocking means for blocking the position of the glazing beads provided with pressers lowered vertically to the point where the glazing beads are located to block the position thereof inside the respective containment channels and adapted to ensure that the glazing beads do not move during cutting.

In addition, the blocking means are provided with vertically lowered abutment slabs to be placed on the side of each glazing bead opposite the side starting from which the cutting means cut the glazing beads.

This way, the blocking means prevent the cantilevered portions of the glazing beads from bending under the pressure exerted by the cutting means during cutting.

These solutions allow the machines of known type and their related equipment to cut one or more glazing beads easily and accurately.

The machines of known type and their related equipment are however susceptible to improvements related to the handling of the glazing beads.

The glazing beads contained inside their related containment channels are in fact subject to significant rotations and/or deformations that negatively affect the cut of the glazing bead itself.

Similarly, the cantilevered portions of the glazing beads resting on the abutment slabs undergo significant deformation that negatively affects the cut of the glazing bead itself.

Moreover, these phenomena are particularly pronounced and occur at different degrees due to the fact that they depend on environmental conditions, such as e.g. temperature, and increase the negative effects on cutting.

In addition, the machines and related equipment of known type have loading means and unloading means of the glazing beads generally of the manual type, which inevitably slow down the cutting operations and production times of the same machines and related equipment.

These drawbacks make this type of machine and the relevant equipment inaccurate and slow in cutting operations, thus increasing the risk of producing defective glazing beads both in terms of aesthetic and technical characteristics.

### Description of the Invention

The main aim of the present invention is to devise a machine for cutting glazing beads and related equipment which allow increasing the accuracy, speed and quality of the cutting operations relative to the machines and to the related equipment of known type.

A further object of the present invention is to devise a machine for cutting glazing beads and related equipment which allow increasing the speed of loading and unloading of the glazing beads compared to the machines and related equipment of known type.

An additional object of the present invention is to devise a machine for cutting glazing beads and a related piece of equipment that allows maintaining unchanged the shape of the glazing beads during cutting regardless of environmental conditions.

Another object of the present invention is to devise a machine for cutting glazing beads and a related equipment which allow overcoming the above mentioned drawbacks of the prior art within a simple, rational, easy, effective to use and low cost solution.

The above mentioned objects are achieved by the present machine for cutting glazing beads having the characteristics of claim 1.

The above mentioned objects are achieved by the present equipment for cutting glazing beads having the characteristics of claim 13.

### Brief Description of the Drawings

Other characteristics and advantages of the present invention will become more evident from the description of a preferred, but not exclusive, embodiment of a machine for cutting glazing beads and related equipment, illustrated by way of an indicative, yet non-limiting example, in the accompanying tables of drawings wherein:
Figure 1 is a sectional view of the equipment according to the invention;
Figure 2 is an axonometric view of a portion of the machine according to the invention;
Figure 3 is a detailed view of a group of elements in Figure 2;

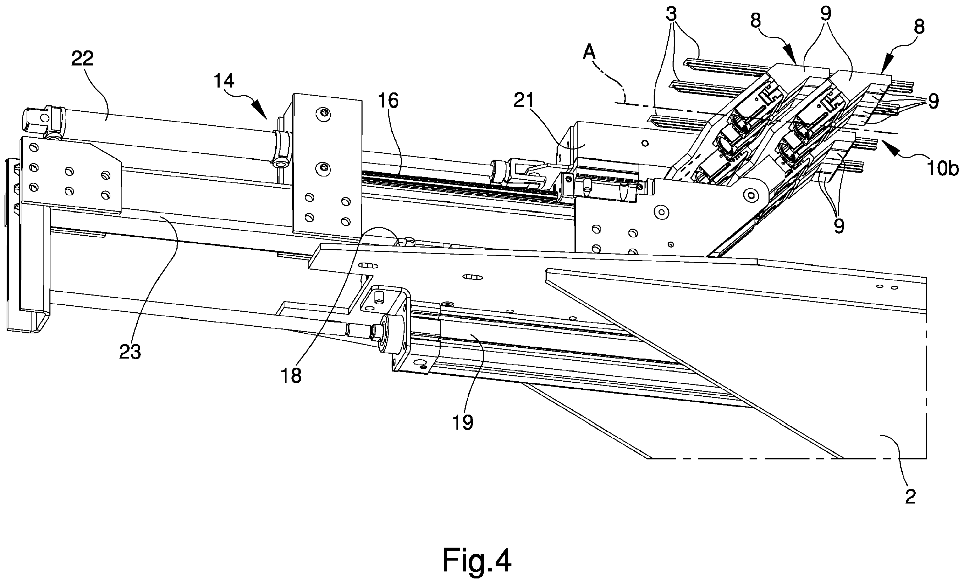

Figure 4 is a detailed view of another group of elements in Figure 2.

### Embodiments of the Invention

With particular reference to these figures, reference numeral 1 globally indicates a machine for cutting glazing beads.

The machine 1 for cutting glazing beads comprises:
- at least one basic frame 2;
- cutting means 4, 5, 6 mounted on the basic frame 2 and adapted to cut at least one glazing bead 3;
- movement means 20 mounted on the basic frame 2 and adapted to move the at least one glazing bead 3 along at least one direction of movement A close to/away from the cutting means 4, 5, 6.

According to the present invention, the glazing bead 3 is of the type of a glazing bead of known type, such as e.g. a profiled element and the like, generally used for making window/door frames and the like.

Furthermore, the glazing bead 3 has a substantially elongated conformation and extends longitudinally along a preferred direction of extension.

More specifically, the glazing bead 3 has a substantially greater extension by length than its extension by width and thickness.

Advantageously, the cutting means 4, 5, 6 comprise:
- at least one cutting element 4 lying on a cutting plane substantially transverse to the direction of movement A;
- means of transport 6 of the cutting element 4 along a direction of cutting B which is transverse to the direction of movement A.

Preferably, the direction of cutting B is substantially orthogonal to the direction of movement A.

This way, when the movement means 20 arrange the at least one glazing bead 3 at a cutting point positioned along the direction of movement A, the means of transport 6 move the cutting element 4 to the same cutting point.

Preferably, the direction of cutting B lies on the cutting plane.

In addition, the cutting plane is inclined substantially by 45° relative to the direction of movement A.

According to the invention, the cutting means 4, 5, 6 comprise an additional cutting element 5 lying on an additional cutting plane on which the direction of cutting B lies.

Moreover, the additional cutting plane is inclined by 90° relative to the cutting plane.

In other words, the cutting element 4 is inclined by 90° relative to the additional cutting element 5.

In particular, the cutting element 4 and the additional cutting element 5 are arranged in succession with each other along the direction of cutting B. Preferably, the cutting element 4 and the additional cutting element 5 are cutting discs of known type.

Advantageously, the movement means 20 comprise at least one gripping assembly 10a, 10b, 11a, 11b movable along the direction of movement A, defining at least one housing 7 of at least one portion of the at least one glazing bead 3.

Furthermore, the gripping assembly 10a, 10b, 11a, 11b is provided with at least one retaining element 8 and is movable between at least one gripping configuration, wherein the retaining element 8 is moved close to the at least one glazing bead 3 and contacts it under pressure, fixing the position thereof inside the housing 7, and at least one release configuration, wherein the retaining element 8 is moved away from the at least one glazing bead 3, releasing it. Preferably, the housing 7 extends longitudinally along a direction of extension substantially parallel to the direction of movement A.

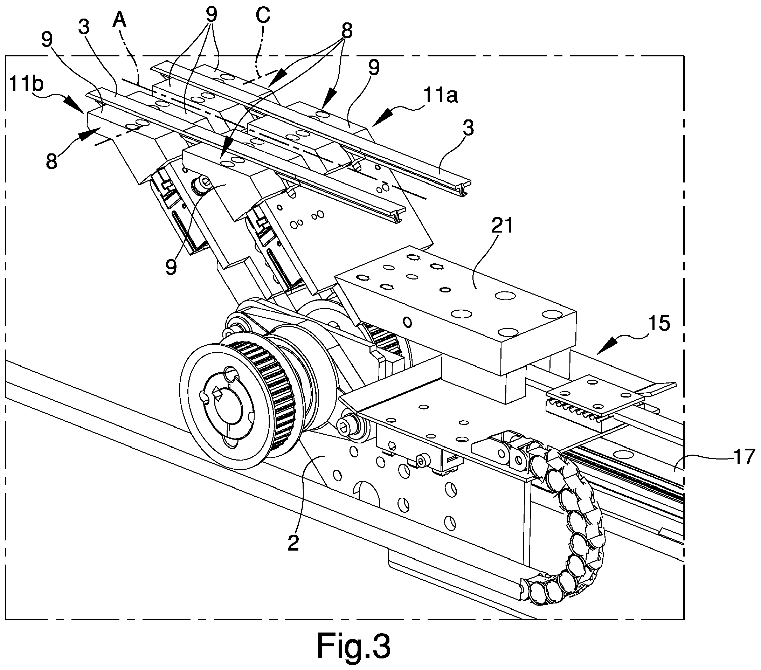

Furthermore, the retaining element 8 fixes the glazing bead 3 so as to arrange the direction of extension of the latter substantially parallel to the direction of movement A, as shown in Figure 3.

Conveniently, the housing 7 has a substantially complementary shape relative to at least one portion of the at least one glazing bead 3.

Preferably, the retaining element 8 defines the shape of the housing 7.

More specifically, the housing 7 has a substantially complementary shape relative to at least one portion of the cross-section of the glazing bead 3.

This way, at least one portion of the glazing bead 3 is fitted to size inside the housing 7.

In addition, the housing 7 defines at least one guiding channel extending along the direction of movement A and inside which the glazing bead 3 is fittable in a sliding manner in the release configuration.

This way, the glazing bead 3 is laterally insertable inside the housing 7. In addition, preferably, the housing 7 holds the corresponding glazing bead 3 at the bottom.

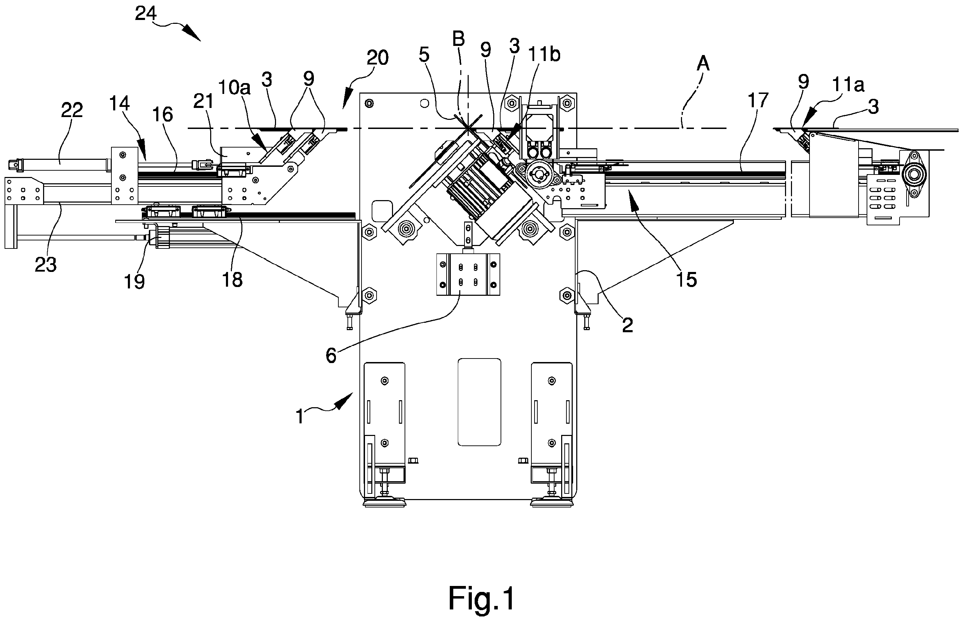

In the following discussion the terms "lower", "upper" and "alongside" used as spatial indications of the mutual arrangement of one or more components of the machine 1 are to be considered valid in the configuration of normal use of such machine shown in Figure 1, wherein the same is arranged resting on the ground and wherein the above mentioned terms indicate the relative height of one or more components measured relative to the ground.

Conveniently, the gripping assembly 10a, 10b, 11a, 11b comprises at least one insert, not shown in the figures, and removable coupling means of the retaining element 8 to the insert.

In addition, the gripping assembly 10a, 10b, 11a, 11b comprises a plurality of retaining elements 8 defining housings 7 having different conformations from each other.

In particular, to each of the housings 7 corresponds a glazing bead 3 having at least partly a substantially complementary conformation to that of the housing itself.

This way, the retaining elements 8 are interchangeable with the retaining elements 8 defining housings 7 of different conformation depending on the conformation of the glazing bead 3 to be cut.

Advantageously, the gripping assembly 10a, 10b, 11a, 11b comprises a plurality of retaining elements 8 located substantially side by side along a direction of alignment C.

In particular, the direction of alignment C is substantially transverse to the direction of movement A.

This way, the gripping assembly 10a, 10b, 11a, 11b retains a plurality of glazing beads 3 located substantially parallel to each other inside their respective housings 7.

Preferably, the direction of alignment C is substantially orthogonal to the direction of movement A.

Conveniently, the retaining element 8 comprises at least one pair of retaining portions 9 located substantially opposite and facing each other.

Specifically, the retaining portions 9 are moved close to each other to contact under pressure the glazing bead 3 in the gripping configuration, and are moved away from each other to release the glazing bead 3 in the release configuration.

Preferably, each retaining portion 9 is movable independently of the other.

In particular, the gripping assembly 10a, 10b, 11a, 11b comprises at least one pair of motor-driven assemblies, not shown in the figure, for the movement of each retaining portion 9 independently of the other.

In addition, the pair of retaining portions 9 defines the shape of the housing 7. Preferably, the retaining portions 9 are positioned side-by-side to each other. Furthermore, each retaining portion 9 defines a portion of the housing 7.

This way, in the gripping configuration, each retaining portion 9 is pressed under pressure on a respective sidewall of the glazing bead 3, by fixing the position thereof inside the housing 7.

In other words, the pair of retaining portions 9 define the jaws of a vice mechanism, where the contact faces of these jaws with the glazing bead 3 are shaped in a complementary manner to the conformation of the sidewalls of the glazing bead itself.

Advantageously, the gripping assembly 10a, 10b, 11a, 11b comprises at least one sensor device configured to determine when the gripping assembly 10a, 10b, 11a, 11b is in one of either the gripping configuration or the release configuration.

In addition, the sensor device is configured to determine whether, in the gripping configuration, the retaining portions 9 contact the glazing bead 3. Conveniently, the movement means 20 comprise at least one pair of gripping assemblies 10a, 10b, 11a, 11b positioned aligned with each other along the direction of movement A.

This way, the pair of gripping assemblies 10a, 10b, 11a, 11b hold one or more glazing beads 3 at the respective gripping points positioned along the direction of movement A and spaced apart from each other.

In addition, the movement means 20 comprise at least one movement assembly 14, 15 positioned between the basic frame 2 and at least one of the gripping assemblies 10a, 10b, 11a, 11b and adapted to move the latter close to/away from the other of the gripping assemblies 10a, 10b, 11a, 11b along the direction of movement A.

Preferably, according to the embodiment of the machine 1 shown in the figures, the movement assembly 14, 15 is positioned between the basic frame 2 and only one of the gripping assemblies 10a, 10b, 11a, 11b so as to move the latter relative to the other.

Indeed, the pair of gripping assemblies 10a, 10b, 11a, 11b comprises at least a first gripping assembly 10a, 11a moved by the movement assembly 14, 15 and at least a second gripping assembly 10b, 11b located in a fixed position relative to the first gripping assembly 10a, 11a.

In addition, the second gripping assembly 10b, 11b is arranged close to the cutting means 4, 5, 6 along the direction of movement A relative to the first gripping assembly 10a, 11a, as shown in Figure 1.

Preferably, the movement assembly 14, 15 comprises at least one rectilinear guide 16, 17 extending longitudinally substantially along the direction of movement A, at least one holding element 21 of the first gripping assembly 10a, 11a coupled in a movable manner along the direction of movement A to the rectilinear guide 16, 17 and at least one actuator device 22 associated with the supporting element 23 and adapted to move the latter along the rectilinear guide 16, 17.

Advantageously, the movement means 20 comprise:
- at least one supporting element 23 of the pair of gripping assemblies 10a, 10b, 11a, 11b and of the movement assembly 14, 15;
- at least one travel assembly 18, 19 positioned between the basic frame 2 and the supporting element 23 and adapted to move the latter close to/away from the cutting means 4, 5, 6.

Preferably, the travel assembly 18, 19 comprises at least one longitudinal guide 18 extending longitudinally substantially along the direction of movement A and to which the supporting element 23 is coupled in a movable manner along the direction of movement A, and at least one motor device 19 associated with the supporting element 23 and adapted to move the latter along the longitudinal guide 18.

This way, the pair of gripping assemblies 10a, 10b, 11a, 11b are moved together by means of the travel assembly 18, 19, and one relative to the other by means of the movement assembly 14, 15.

Conveniently, the movement means 20 comprise:
- at least one pair of loading gripping assemblies 10a, 10b located upstream of the cutting means 4, 5, 6;
- at least one pair of unloading gripping assemblies 11a, 11b located downstream of the cutting means 4, 5, 6 and aligned with the pair of loading gripping assemblies 10a, 10b along the direction of movement A.

Furthermore, the movement means 20 comprise at least one of either:
- a plurality of pairs of loading gripping assemblies 10a, 10b positioned side by side;
- a plurality of pairs of unloading gripping assemblies 11a, 11b positioned side by side.

In detail, according to a particular embodiment of the machine 1 shown in the figures, the movement means 20 comprise a loading movement assembly 14 positioned between the pair of loading gripping assemblies 10a, 10b and one unloading movement assembly 15 positioned between the pair of unloading gripping assemblies 11a, 11b and the basic frame 2.

In particular, the movement means 20 comprise at least a first loading gripping assembly 10a and a second loading gripping assembly 10b, wherein the first loading gripping assembly 10a is moved relative to the second loading gripping assembly by means of the loading movement means 14.

Similarly, the movement means 20 comprise at least a first unloading gripping assembly 11a and a second unloading gripping assembly 11b, wherein the first unloading gripping assembly 11a is moved relative to the second unloading gripping assembly by means of the unloading movement means 15.

In addition, the travel assembly 18, 19 is positioned between the loading movement assembly 14 and the basic frame 2.

Preferably, the loading movement assembly 14 and the unloading movement assembly 15 are provided with a rectilinear loading guide 16 and a rectilinear unloading guide 17 respectively, wherein the rectilinear loading guide 16 is substantially shorter in length than the rectilinear unloading guide 17. Furthermore, in this embodiment, the movement means 20 comprise a pair of loading gripping assemblies 10a, 10b, wherein each loading gripping assembly 10a, 10b comprises four retaining elements 8.

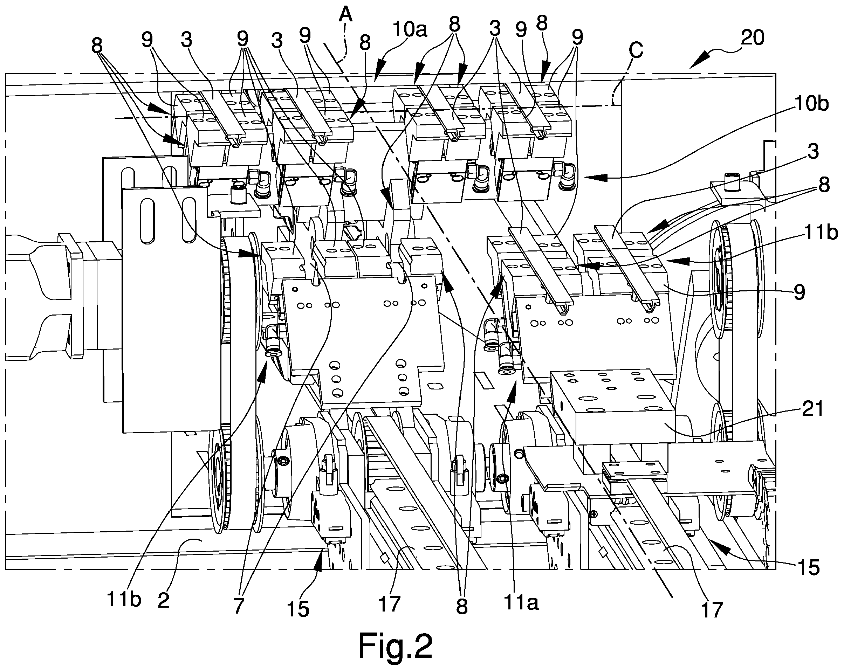

Preferably, the retaining elements 8 of each loading gripping assembly 10a, 10b are spaced apart from each other in pairs of two by a first predefined distance, where each pair is spaced apart in turn from the other by a second predefined distance substantially greater than the first predefined distance, as shown in Figure 2.

According to this embodiment, the movement means 20 comprise two pairs of unloading gripping assemblies 11a, 11b side by side to each other, wherein each unloading gripping assembly 11a, 11b comprises two retaining elements 8. Moreover, the movement means 20 comprise two unloading movement assemblies 15 positioned between the basic frame 2 and a pair of unloading gripping assemblies 11a, 11b and between the basic frame 2 and the other pair of unloading gripping assemblies 11a, 11b, respectively.

This way, the first unloading movement assembly 15 and the second unloading movement assembly 15 allow the two pairs of unloading gripping assemblies 11a to be moved independently.

The operation of the machine just described is as follows.

Initially, the loading movement assembly 14 moves the first loading gripping assembly 10a to the position of maximum departure from the second loading gripping assembly 10b.

Similarly, the travel assembly 18, 19 moves the pair of loading gripping assemblies 10a, 10b to the position of maximum departure from the cutting means 4, 5, 6.

In addition, in this configuration, the retaining elements 8 of the pair of loading gripping assemblies 10a, 10b are in the release configuration.

This way, the retaining element 8 of the first loading gripping assembly 10a can accommodate a glazing bead 3 inside the respective housing 7.

Subsequently, the retaining element 8 of the first loading gripping assembly 10a is moved from the release configuration to the gripping configuration and the same first loading gripping assembly is moved to the maximum approach position to the second loading gripping assembly 10b. Simultaneously, the glazing bead 3 is inserted through the housing 7 of the second loading gripping assembly 10b and the corresponding retaining element 8 is moved from the release configuration to the gripping configuration.

This way, the position of the glazing bead 3 is fixed by the pair of loading gripping assemblies 10a, 10b.

In this configuration, the first unloading gripping assembly 11a is positioned at the maximum approach position to the second unloading gripping assembly 11b.

In addition, the retaining elements 8 of the pair of unloading gripping assemblies 11a, 11b are in the release configuration.

This way, following the movement of the pair of loading gripping assemblies 10a, 10b at the position of maximum approach to the cutting means 4, 5, 6, the glazing bead 3 is inserted through the housings 7 of the pair of unloading gripping assemblies 11a, 11b.

Then, the retaining elements of the pair of unloading gripping assemblies 11a, 11b are moved from the release configuration to the gripping configuration.

In this configuration, the glazing bead 3 is securely retained by the pair of loading and unloading gripping assemblies 10a, 10b, 11a, 11b.

This way, the cutting means 4, 5, 6 are moved along the direction of cutting B and cut the glazing bead 3.

Thereafter, the retaining element 8 of the second unloading gripping assembly 11b is moved to the release configuration and the first unloading gripping assembly 11a is moved away from the second unloading gripping assembly to unload the cut glazing bead 3.

In particular, for the purpose of unloading the glazing bead 3, the retaining element 8 of the first unloading assembly 11a is moved to the release configuration to allow the removal of the glazing bead 3 and is returned to the maximum approach position to the second unloading gripping assembly 11b. Simultaneously, the first loading gripping assembly 10a retrieves the remaining portion of the glazing bead 3 to perform an additional cut.

In other words, the retaining element 8 of the first loading gripping assembly 10a is moved to the release configuration and is moved away from the second loading gripping assembly 10b to a predefined position.

After reaching the predefined position, the configurations of the retaining elements 8 of the pair of loading gripping assemblies 10a, 10b are reversed and the first loading gripping assembly 10a is moved again to the position of maximum approach to the second loading gripping assembly 10b.

After reaching this configuration, the retaining elements 8 of the second loading gripping assembly 10b and of the pair of unloading gripping assemblies 11a, 11b are moved to the gripping configuration so that the position of the glazing bead 3 is fixed again.

When the cutting of a glazing bead 3 is finished, the remaining portion is removed from the pair of loading gripping assemblies 10a, 10b and the above mentioned procedure can be repeated.

All the operations described with reference to a retaining element 8 of a pair of loading gripping assemblies 10a, 10b and of a pair of unloading gripping assemblies 11a, 11b are to be considered valid for a plurality of retaining elements 8 of a plurality of pairs of loading gripping assemblies 10a, 10b and of a plurality of pairs of unloading gripping assemblies 11a, 11b.

The present invention relates to a piece of equipment for cutting glazing beads globally indicated with reference numeral 24 in the figures.

The equipment 24 for cutting glazing beads comprises:
- at least one glazing bead 3 to be cut;
- a machine having one or more of the characteristics described above with reference to the machine 1.

It has in practice been ascertained that the described invention achieves the intended objects.

In particular, the fact is underlined that the gripping assemblies allow the glazing bead to be kept firm and stable, thus significantly reducing its deformation during cutting.

In addition, the retaining elements and their respective retaining portions make it possible to fix the position of the glazing beads by significantly reducing the deformation suffered by the same.

In addition, the movement assembly and the travel assembly allow moving the glazing bead in a continuous and automatic way, thus significantly increasing the speed of loading, unloading and cutting of the glazing beads compared to known machines.

## Claims

1. Machine (1) for cutting glazing beads, comprising:
- at least one basic frame (2);
- cutting means (4, 5, 6) mounted on said basic frame (2) and adapted to cut at least one glazing bead (3);
- movement means (20) mounted on said basic frame (2) and adapted to move said at least one glazing bead (3) along at least one direction of movement (A) close to/away from said cutting means (4, 5, 6);
**characterized by** the fact that said movement means (20) comprise at least one gripping assembly (10a, 10b, 11a, 11b) movable along said direction of movement (A), defining at least one housing (7) of at least one portion of said at least one glazing bead (3), provided with at least one retaining element (8) and movable between at least one gripping configuration, wherein said retaining element (8) is moved close to said at least one glazing bead (3) and contacts it under pressure, fixing the position thereof inside said housing (7), and at least one release configuration, wherein said retaining element (8) is moved away from said at least one glazing bead (3), releasing it.

2. Machine (1) according to claim 1, **characterized by** the fact that said housing (7) has a substantially complementary shape relative to at least one portion of said at least one glazing bead (3).

3. Machine (1) according to one or more of the preceding claims, **characterized by** the fact that said gripping assembly (10a, 10b, 11a, 11b) comprises a plurality of retaining elements (8) located substantially side by side along a direction of alignment (C) substantially transverse to the direction of movement (A).

4. Machine (1) according to one or more of the preceding claims, **characterized by** the fact that said retaining element (8) comprises at least one pair of retaining portions (9) located substantially opposite and facing each other, said retaining portions (9) being moved close to each other to contact under pressure said at least one glazing bead (3) in said gripping configuration, and being moved away from each other to release said at least one glazing bead (3) in said release configuration.

5. Machine (1) according to one or more of the preceding claims, **characterized by** the fact that said pair of retaining portions (9) defines the shape of said housing (7).

6. Machine (1) according to one or more of the preceding claims, **characterized by** the fact that said gripping assembly (10a, 10b, 11a, 11b) comprises at least one sensor device configured to determine when said gripping assembly (10a, 10b, 11a, 11b) is in one of either said gripping configuration or said release configuration.

7. Machine (1) according to one or more of the preceding claims, **characterized by** the fact that said movement means (20) comprise:
- at least one pair of gripping assemblies (10a, 10b, 11a, 11b) positioned aligned with each other along said direction of movement (A);
- at least one movement assembly (14, 15) positioned between said basic frame (2) and at least one of said gripping assemblies (10a, 10b, 11a, 11b) and adapted to move the latter close to/away from the other of said gripping assemblies (10a, 10b, 11a, 11b) along said direction of movement (A).

8. Machine (1) according to one or more of the preceding claims, **characterized by** the fact that said movement means (20) comprise:
- at least one supporting element (23) of said pair of gripping assemblies (10a, 10b, 11a, 11b) and of said movement assembly (14, 15);
- at least one travel assembly (18, 19) positioned between said basic frame (2) and said supporting element (23) and adapted to move the latter close to/away from said cutting means (4, 5, 6).

9. Machine (1) according to one or more of the preceding claims, **characterized by** the fact that said movement means (20) comprise:
- at least one pair of loading gripping assemblies (10a, 10b) located upstream of said cutting means (4, 5, 6);
- at least one pair of unloading gripping assemblies (11a, 11b) located downstream of said cutting means (4, 5, 6) and aligned with said pair of loading gripping assemblies (10a, 10b) along said direction of movement (A).

10. Machine (1) according to one or more of the preceding claims, **characterized by** the fact that:
- said movement means (20) comprise at least one loading movement assembly (14) positioned between said pair of loading gripping assemblies (10a, 10b) and one unloading movement assembly (15) positioned between said pair of unloading gripping assemblies (11a, 11b) and the basic frame (2);
- said travel assembly (18, 19) is positioned between said loading movement assembly (14) and said basic frame (2).

11. Machine (1) according to one or more of the preceding claims, **characterized by** the fact that said movement means (20) comprise at least one of either:
- a plurality of said pairs of loading gripping assemblies (10a, 10b) positioned side by side;
- a plurality of said pairs of unloading gripping assemblies (11a, 11b) positioned side by side.

12. Machine (1) according to one or more of the preceding claims, **characterized by** the fact that said cutting means (4, 5, 6) comprise:
- at least one cutting element (4) lying on a cutting plane substantially transverse to said direction of movement (A);
- means of transport (6) of said cutting element (4) along a direction of cutting (B) which is transverse to said direction of movement (A).

13. Equipment (24) for cutting glazing beads, comprising:
- at least one glazing bead (3) to be cut;
- a machine according to one or more of claims 1 to 12.
